# EUROPEAN PATENT SPECIFICATION

(11) **EP 3 536 646 B1**
(45) Date of publication and mention of the grant of the patent: **27.01.2021**
(21) Application number: 19161156.5
(22) Date of filing: 06.03.2019
(51) Int. Cl.: B66B 1/46

(54) **AUTHORIZATION MANAGEMENT OF ELEVATOR SERVICE REQUEST**
BERECHTIGUNGSVERWALTUNG EINER AUFZUGDIENSTANFORDERUNG
GESTION D'AUTORISATION D'UNE DEMANDE DE SERVICE D'ASCENSEUR

(30) Priority: 06.03.2018 CN 201810183964
(43) Date of publication of application: 11.09.2019
(73) Proprietor: Otis Elevator Company, Farmington, Connecticut 06032 (US)
(72) Inventor: YANG, Yang, PuDong, Shanghai 201206 (CN); ZHANG, Yu, PuDong, Shanghai 201206 (CN); LI, Kai, PuDong, Shanghai 201206 (CN); MA, Siqi, PuDong, Shanghai 201206 (CN); WANG, Shenhong, PuDong, Shanghai 201206 (CN)
(74) Representative: Dehns

(56) References cited:
- WO-A1-2016/198548
- WO-A1-2017/175020
- US-A- 5 159 163
- US-A1- 2006 259 777

## Description

### Technical Field

The present invention belongs to the field of elevator management technologies, and relates to authorization management for an elevator service request from a personal mobile terminal, and in particular, to an authorization management apparatus and method for an elevator service request and an elevator management system using the personal mobile terminal and the authorization management apparatus.

### Background Art

With the development of elevator technologies, various technologies for implementing an elevator service request operation automatically through a personal mobile terminal such as a smart phone have emerged. For facilitating the elevator management, however, not every passenger has the permission to send an elevator service request command to an elevator system through a personal mobile terminal. Generally, only an authorized personal mobile terminal can send an elevator service request command to an elevator system.

Currently, access permissions to an elevator system or a specific elevator are granted to passengers one by one by a manager face to face. An access credential, such as a PVC card, having the access permission to a corresponding elevator is issued to an authorized passenger. WO 2017/175020 describes a system in which visitors can be granted access to areas of a building via an elevator system, by using a mobile device after completing a verification process initiated by a tenant of the building.

### Summary of the Invention

According to a first aspect of the present invention, an authorization management apparatus for an elevator service request is provided according to claim 1.

In the authorization management apparatus according to an embodiment of the present invention, the authorization request information includes an elevator identifier of a corresponding elevator of an elevator system acquired by the corresponding personal mobile terminal and a terminal identifier of the personal mobile terminal mapped to the elevator identifier.

In the authorization management apparatus according to an embodiment of the present invention, the authorization management unit is further configured to determine, at least also based on a mapping relationship between the elevator identifier and the terminal identifier in the authorization request information, whether the authorization request information from the corresponding personal mobile terminal is allowed to be authorized.

In the authorization management apparatus according to an embodiment of the present invention, the selecting unit is further configured to select a corresponding authorization mode for different elevators or different elevator systems or different elevator groups.

In the authorization management apparatus according to an embodiment of the present invention, the authorization management apparatus is deployed in a property management system of a building where the managed elevator system is located.

In the authorization management apparatus according to an embodiment of the present invention, the authorization management unit is further configured to display multiple pieces of the authorization request information in a list form when it is determined based on the selected authorization mode (c) whether the authorization request information is allowed to be authorized.

In the authorization management apparatus according to an embodiment of the present invention, the list includes an authorization operation column having an icon that is set corresponding to each piece of authorization request information and capable of being clicked or activated by the manual input.

In the authorization management apparatus according to an embodiment of the present invention, the authorization management unit is further configured to: when the authorization request information of the personal mobile terminal corresponding to an elevator in an elevator group is allowed to be authorized, allow authorizing the personal mobile terminal to send an elevator service request command to another elevator in the elevator group.

In the authorization management apparatus according to an embodiment of the present invention, the authorization request information further includes identity credential information of a passenger and/or a floor requested to be authorized.

According to a second aspect of the present invention, an authorization management method for an elevator service request is provided according to claim 7.

In the authorization management method according to an embodiment of the present invention, the authorization request information includes an elevator identifier of a corresponding elevator of an elevator system acquired by the corresponding personal mobile terminal and a terminal identifier of the personal mobile terminal mapped to the elevator identifier.

In the authorization management method according to an embodiment of the present invention, in the determination step, it is determined at least also based on a mapping relationship between the elevator identifier and the terminal identifier in the authorization request information whether the authorization request information from the corresponding personal mobile terminal is allowed to be authorized.

In the authorization management method according to an embodiment of the present invention, in the selection step, a corresponding authorization mode is selected for different elevators or different elevator systems or different elevator groups.

In the authorization management method according to an embodiment of the present invention, in the selection step, if the elevator or elevator system or elevator group has no access restriction, fully auto-allowed authorization in the authorization mode (a) is selected; or
if the elevator or elevator system or elevator group has an access-forbidden restriction in a current time period, fully auto-forbidden authorization in the authorization mode (a) is selected.

In the authorization management method according to an embodiment of the present invention, in the selection step, if the elevator or elevator system or elevator group has no access restriction for a predefined personal mobile terminal for which authorization is allowed automatically, auto-allowed authorization in batches in the authorization mode (b) is selected; or
if the elevator or elevator system or elevator group has an access-forbidden restriction for a predefined personal mobile terminal for which authorization is forbidden automatically, auto-forbidden authorization in the authorization mode (b) is selected.

In the authorization management method according to an embodiment of the present invention, in the selection step, if the elevator or elevator system or elevator group needs to have an access restriction for each personal mobile terminal, the authorization mode (c) is selected.

In the authorization management method according to an embodiment of the present invention, in the determination step, multiple pieces of the authorization request information are displayed in a list form when it is determined based on the selected authorization mode (c) whether the authorization request information is allowed to be authorized.

In the authorization management method according to an embodiment of the present invention, the list includes an authorization operation column having an icon that is set corresponding to each piece of authorization request information and capable of being clicked or activated by the manual input.

In the authorization management method according to an embodiment of the present invention, after it is determined based on the authorization mode (a) or the authorization mode (b) whether the authorization request information is allowed to be authorized, the selection step is continued to select the authorization mode (c), and at least part of the authorization request information determined based on the authorization mode (a) or the authorization mode (b) is updated based on the authorization mode (c) to determine whether the at least part of the authorization request information is allowed to be authorized.

The authorization management method according to an embodiment of the present invention further comprises a step of:
when the authorization request information of the personal mobile terminal corresponding to an elevator in an elevator group is allowed to be authorized, allowing authorizing the personal mobile terminal to send an elevator service request command to another elevator in the elevator group.

In the authorization management method according to an embodiment of the present invention, the elevator identifier is a QR code or barcode.

In the authorization management method according to an embodiment of the present invention, the terminal identifier is a communication number, a unique identification code of the personal mobile terminal or an ID of a passenger using the personal mobile terminal.

In the authorization management method according to an embodiment of the present invention, the authorization request information further includes identity credential information of a passenger and/or a floor requested to be authorized.

According to a third aspect of the present invention, an elevator management system is provided, for managing a personal mobile terminal configured to send an elevator service request command automatically, wherein the elevator management system includes the authorization management apparatus according to any of the foregoing aspects.

In the elevator management system according to an embodiment of the present invention, the personal mobile terminal includes:
an acquiring unit configured to acquire an elevator identifier of a corresponding elevator of an elevator system; and
an authorization request generating and sending unit configured to generate and send authorization request information, wherein the authorization request information includes the acquired elevator identifier and a terminal identifier of the personal mobile terminal mapped to the elevator identifier.

The above features and operations of the present invention will become more evident according to the following descriptions and accompanying drawings.

### Brief Description of the Drawings

The above and other objectives and advantages of the present invention will become more complete and clearer from the following detailed descriptions with reference to the accompanying drawings. The same or similar elements are represented with the same reference signs.
FIG. 1 is a schematic diagram of an elevator management system according to an embodiment of the present invention, in which an authorization management apparatus for an elevator service request according to an embodiment of the present invention is used.
FIG. 2 is a schematic diagram of an application scenario of a personal mobile terminal according to an embodiment of the present invention.
FIG. 3 is a schematic diagram of an input interface of a personal mobile terminal according to an embodiment of the present invention.
FIG. 4 is a schematic diagram of a selection interface of a selecting unit of an authorization management apparatus according to an embodiment of the present invention.
FIG. 5 is a schematic diagram of an elevator system to which a personal mobile terminal is applied according to an embodiment of the present invention.
FIG. 6 is a flowchart of an authorization management method for an elevator service request according to an embodiment of the present invention.
FIG. 7 is a flowchart of an authorization management method for an elevator service request according to an embodiment of the present invention.
FIG. 8 is a flowchart of an authorization management method for an elevator service request according to another embodiment of the present invention.
FIG. 9 is a flowchart of an authorization management method for an elevator service request according to yet another embodiment of the present invention.
FIG. 10 is a flowchart of an authorization management method for an elevator service request according to still another embodiment of the present invention.

### Detailed Description

The present invention is now described more thoroughly with reference to the accompanying drawings, in which exemplary embodiments of the present invention are shown. However, the present invention can be implemented according to a number of different forms and should not be construed as being limited to the embodiments elaborated here. On the contrary, these embodiments are provided to make the disclosure thorough and complete and to fully convey the idea of the present invention to those skilled in the art.

Some of the block diagrams shown in the accompanying drawings are functional entities that do not necessarily correspond to physically or logically independent entities. These functional entities can be implemented in the form of software, or in one or more hardware modules or integrated circuits, or in different processing apparatuses and/or micro-controller apparatuses.

The applicant notes that the authorization for an elevator service request needs to be improved as the existing authorization process described in the Background is complex and inflexible, the manager cannot manage the elevator system conveniently, cannot operate easily and has a heavy workload, and the passenger experience is relatively poor.

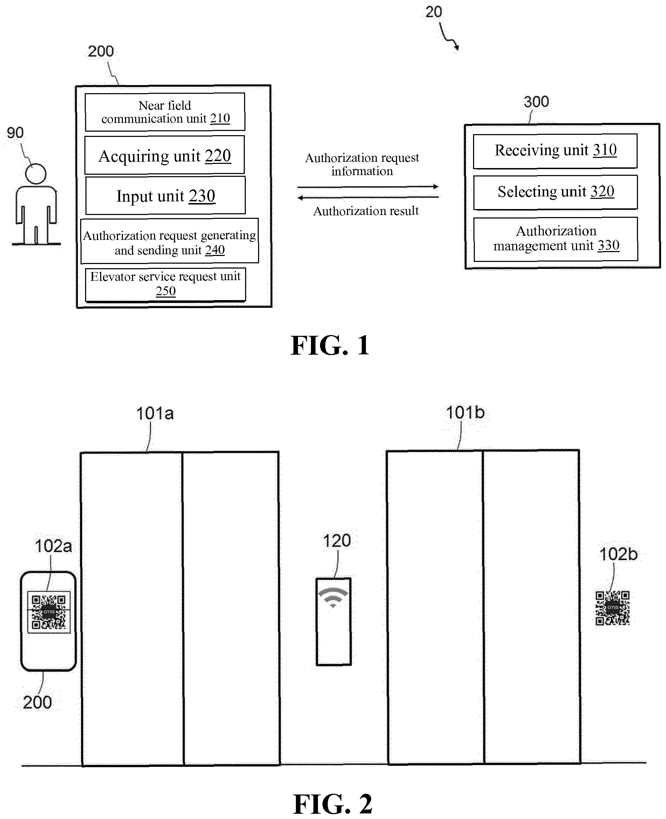

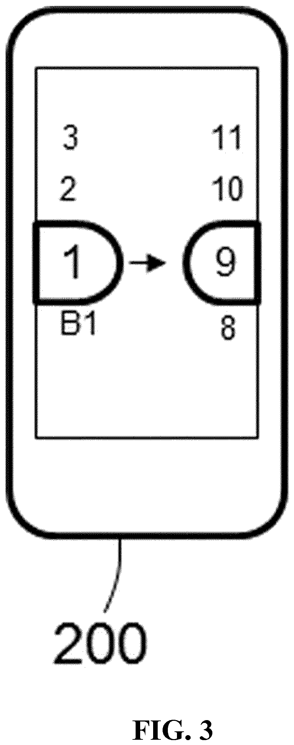

FIG. 1 is a schematic diagram of an elevator management system according to an embodiment of the present invention, in which an authorization management apparatus for an elevator service request according to an embodiment of the present invention is used. FIG. 2 is a schematic diagram of an application scenario of a personal mobile terminal according to an embodiment of the present invention. FIG. 3 is a schematic diagram of an input interface of a personal mobile terminal according to an embodiment of the present invention. An elevator management system 20, a personal mobile terminal 200 and an authorization management apparatus 300 according to an embodiment of the present invention are illustrated in detail below with reference to FIG. 1, FIG. 2 and FIG. 3.

The elevator management system 20 according to the embodiment of the present invention can manage elevator systems mounted or operated in multiple buildings (such as a community), for example, manage access of a passenger 90 to a corresponding elevator system. It will be appreciated that in this application, each elevator in each elevator system can be distinguished or identified by a corresponding elevator identifier. For example, an elevator 101a and an elevator 101b shown in FIG. 2 are Elevator A and Elevator B in the 10th building of the community respectively, and corresponding elevator identifiers 102a and 102b can be assigned to the elevator 101a and elevator 101b by the manager respectively. The elevator identifier 102 assigned to each elevator can be stored uniformly in, for example, the authorization management apparatus 300 of the elevator management system 20.

As shown in FIG. 2, the elevator identifier 102 assigned to an elevator 101 may be a QR code that is easy to scan or another identifier that is easy to acquire, such as a barcode. The elevator identifier 102 may correspond to the corresponding elevator 101 and be mounted next to the elevator 101 to facilitate scanning. It will be appreciated that a mounting position of the elevator identifier 102 is not limited. In other embodiments, for example, the elevator identifier 102 may also be presented on the network.

It will be appreciated that according to management requirements, elevators in an elevator system can be grouped, or elevators in multiple elevator systems in different buildings can be grouped. As an example, elevators with the same passenger access management can be classified into one group. Correspondingly, the elevator identifier 102 may include group information, and thus an elevator group to which the elevator 101 belongs can be obtained based on the elevator identifier 102.

It should be noted that an elevator 101 mainly refers to (e.g., one or more) elevator car(s) traveling on the same hoistway section of a building.

The personal mobile terminal 200 can be various smart terminals having a wireless communication function (such as a Bluetooth communication function), which is convenient for the passenger 90 to carry. The personal mobile terminal 200 can be provided with a memory, a processor having a computing function, and the like. Specifically, the personal mobile terminal 200 can be a smart phone, a wearable smart device (such as a smart bracelet), a personal digital assistant (PAD), etc., and can be installed with a corresponding application program or component (such as an APP) thereon to implement the elevator service request system according to the embodiment of the present invention or its function.

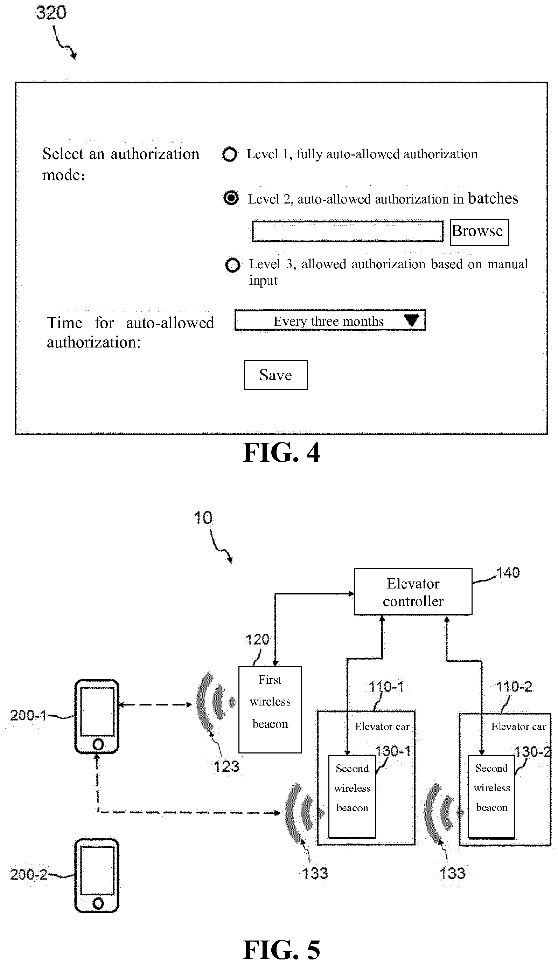

As shown in FIG. 1, the personal mobile terminal 200 is provided with a near field communication unit 210. Through the near field communication unit 210, the personal mobile terminal 200 is capable of automatically sensing a wireless signal (such as a first wireless signal 123) broadcast by a wireless beacon (such as a first wireless beacon 120 mounted in an elevator landing zone as shown in FIG. 2) mounted in an elevator system 10 (as shown in FIG. 5). Moreover, the near field communication unit 210 can establish corresponding wireless communication (such as a Bluetooth connection) with the first wireless beacon 120 when a predetermined condition is met, and thus can interact with the wireless beacon in the elevator system, for example, send an elevator service request command (such as an elevator service request command indicating an elevator call).

In an embodiment, the personal mobile terminal 200 is provided with an elevator service request unit 250. The elevator service request unit 250 is configured to automatically send a corresponding elevator service request command to the wireless beacon in the elevator system 10 when a predetermined condition is met (for example, when a signal strength value is greater than or equal to a corresponding threshold), so that the passenger 90 can complete, for example, an elevator call request free of operation.

An elevator service request command generated by the elevator service request unit 250 may include a starting floor, or may include a starting floor and/or a destination floor. The elevator service request command generated by the elevator service request unit 250 may be sent through the near field communication unit 210 to the wireless beacon (such as the first wireless beacon 120) that has established wireless communication with the near field communication unit 210.

Based on the near field communication unit 210 and the elevator service request unit 250, the passenger 90 can complete an elevator service request operation automatically when carrying the personal mobile terminal 200, thus having good passenger experience.

However, for an elevator management system 20 or an elevator manager, the permission to an elevator service request from a personal mobile terminal 200 may be limited according to management requirements. In other words, the authorization of the elevator service request from the personal mobile terminal 200 needs to be managed. For example, for a passenger 90 living on the 9th floor of the 10th building in the community, his/her personal mobile terminal 200 is only granted with an elevator service request function of an elevator of the 10th building in the community, or only granted with elevator service request functions of the 1st floor and the 9th floor of the 10th building in the community.

Still as shown in FIG. 1, the personal mobile terminal 200 according to the embodiment of the present invention is capable of generating corresponding authorization request information. To enable the personal mobile terminal 200 to generate the corresponding authorization request information conveniently, the personal mobile terminal 200 is provided with an acquiring unit 220. The acquiring unit 220 is configured to acquire an elevator identifier 102 of a corresponding elevator of an elevator system 10. In an embodiment, as shown in FIG. 2, an elevator identifier 102 corresponding to each elevator 101 can be mounted next to the elevator 101. When the passenger 90 is in an elevator landing zone, the elevator identifier 102 of the elevator 101 can be conveniently obtained by the personal mobile terminal 200. The acquiring unit 220 may specifically be an image acquiring device such as a camera. As shown in FIG. 2, by scanning a QR code 102a of an elevator 101a on site with the image acquiring device, the passenger 90 can acquire the elevator identifier easily.

Still as shown in FIG. 1, in an embodiment, the personal mobile terminal 200 is further provided with an input unit 230. The input unit 230 can be configured to input at least information of a floor requested to be authorized. As an example, after the scanning and acquiring process as shown in FIG. 2 ends, an interface as shown in FIG. 3, that is, the input unit 230, will be displayed on the personal mobile terminal 200. For example, by sliding up and down to select a floor, the information of the floor requested to be authorized can be input conveniently. For example, it is assumed that the passenger 90 checks into the 9th floor, and when requesting authorization, the passenger 90 inputs the floor information as shown in FIG. 2, that is, the 1st floor and 9th floor (i.e., the floors requested to be authorized are the 1st floor and 9th floor). It will be appreciated that the specific input manner of the input unit 230 is not limited to the above example, and the information of the floor requested to be authorized may include more than two floors.

Other information that needs to be input, such as an ID number used as identity credential information of the passenger 90, can also be input through the input unit 230.

Still as shown in FIG. 1, in an embodiment, the personal mobile terminal 200 is further provided with an authorization request generating and sending unit 240. The authorization request generating and sending unit 240 is configured to generate and send authorization request information, wherein the authorization request information includes the acquired elevator identifier 102 and a terminal identifier of the personal mobile terminal 200 mapped to the elevator identifier 102. The terminal identifier of the personal mobile terminal 200 can identify the personal mobile terminal 200, and thus can identify the passenger 90 who uses the personal mobile terminal 200. The terminal identifier can be a communication number (for example, a mobile phone number when the personal mobile terminal 200 is a mobile phone), and the terminal identifier can also be a unique identification code of the personal mobile terminal 200, or even the ID of the passenger 90 who uses the personal mobile terminal 200.

In an embodiment, the authorization request generating and sending unit 240 is further configured to establish a mapping relationship between the acquired elevator identifier 102 and the terminal identifier of the personal mobile terminal 200 so that the terminal identifier is mapped to the elevator identifier 102 or the elevator identifier 102 is mapped to the terminal identifier. For example, a mapping relationship is established between the elevator identifier 102a acquired by scanning and the communication number of the personal mobile terminal 200, so as to form the corresponding authorization request information. It will be appreciated that when the terminal identifier is mapped to the elevator identifier 102, it also indicates that the elevator identifier 102 is mapped to the terminal identifier, and a mapping relationship is established between them to facilitate subsequent authorization management.

In an embodiment, the generated authorization request information may include a floor, requested to be authorized, input in the input interface as shown in FIG. 3, and may further include identity credential information of the passenger 90 (such as an ID card or an employee's card). The identity credential information can be pre-stored in the personal mobile terminal 200, and definitely, can also be obtained through, for example, the input unit 230 and/or the acquiring unit 220 in real time. The identity credential information enables the manager to quickly determine whether to allow authorization based on the authorization request information.

The personal mobile terminal 200 may establish a communication connection with the authorization management apparatus 300 through various types of wireless networks, and thus the authorization request generating and sending unit 240 of the personal mobile terminal 200 can send the authorization request information in real time to the authorization management apparatus 300 corresponding to the elevator system 10.

Still as shown in FIG. 1, the authorization management apparatus 300 may be implemented by various types of computer devices, which may be set in a building or remotely elsewhere, and its location is not restricted. Authorization management of multiple elevator systems can be achieved by one authorization management apparatus 300. In an embodiment, the authorization management apparatus 300 can be disposed in a property management system of a building where the managed elevator system is located to facilitate a property manager to implement authorization management for an elevator service request.

The authorization management apparatus 300 may be provided with a receiving unit 310. The receiving unit 310 is configured to receive authorization request information from each personal mobile terminal 200 (for example, the authorization request information is transmitted through a communication connection established between the personal mobile terminal 200 and the authorization management apparatus 300), so that the authorization request information is processed centrally in the authorization management apparatus 300.

Still as shown in FIG. 1, the authorization management apparatus 300 is further provided with a selecting unit 320. The selecting unit 320 is configured to select an authorization mode from at least two of the following three authorization modes (for example, select one authorization mode):
(a) fully auto-allowed authorization or fully auto-forbidden authorization,
(b) auto-allowed authorization or auto-forbidden authorization in batches, and
(c) allowed authorization or forbidden authorization fully based on manual input.

Three authorization modes are listed on a selection interface of the selecting unit 320 as shown in FIG. 4, "fully auto-allowed authorization" at Level 1 corresponds to a specific example of the above authorization mode (a), "auto-allowed authorization in batches" at Level 2 corresponds to a specific example of the above authorization mode (b), and "allowed authorization based on manual input" at Level 3 corresponds to a specific example of the above authorization mode (c). The manager can select one authorization mode according to a prompt, for example, the authorization mode (b) corresponding to Level 2 is selected.

The selecting unit 320 is further configured to acquire a list of first terminal identifiers of personal mobile terminals 200 for allowing authorization automatically in batches and/or a list of second terminal identifiers of personal mobile terminals 200 for forbidding authorization automatically in batches when the authorization mode (b) is selected. In the example as shown in FIG. 4, a list of first terminal identifiers of personal mobile terminals 200 for partially allowing authorization automatically in batches which is pre-stored in the authorization management apparatus 300 can be browsed and acquired from the authorization management apparatus 300. Specifically, terminal identifiers (such as communication numbers) of personal mobile terminals 200 that have no access restriction to, for example, the elevator 101a or all the elevators are listed in the list of first terminal identifiers. As such, all authorization request information of the terminal identifiers corresponding to the terminal identifiers in the list of first terminal identifiers can be allowed to be authorized in batches in the authorization management unit 330. A similar exemplary operation can be performed for the list of second terminal identifiers.

It will be appreciated that in another alternative embodiment, the selection interface of the selecting unit 320 can also list the following combinations of authorization modes: authorization mode (a) and authorization mode (b); authorization mode (b) and authorization mode (c); or authorization mode (a) and authorization mode (c). The selecting unit 320 can select one of the above combinations of authorization modes based on the input of the manager.

The setting of the selecting unit 320 fully takes into account the diversity and complexity of access of a large number of passengers 90 to corresponding elevators. It combines the convenience and simplicity of auto-allowed authorization in the authorization mode (a) or (b) and the strictness of authorization management in the authorization mode (b) or (c). The manager can select an authorization mode flexibly according to a specific situation. For example, the manager selects different authorization modes for authorization request information of different elevators, selects different authorization modes for authorization request information in different time periods of the same elevator, selects different authorization modes for authorization request information of different floors of the same elevator, and so on. Thus, the authorization of the authorization request information by the manager is much more flexible, which brings convenience to the manager.

In an embodiment, the selecting unit 320 is further configured to select a corresponding authorization mode for different elevators or different elevator systems or different elevator groups. For example, the authorization mode (a) is selected corresponding to authorization request information of elevators in a predefined elevator group M, the authorization mode (b) is selected corresponding to authorization request information of elevators in a predefined elevator group N, and the authorization mode (c) is selected corresponding to authorization request information of elevators in a predefined elevator group F.

In an embodiment, the selecting unit 320 is further configured to be capable of inputting a time limit of the selected authorization mode, that is, a time limit of the selected authorization mode can be set by the selecting unit 320. As an example, as shown in FIG. 4, "time for auto-allowed authorization" in the authorization mode at "Level 2" selected is set to 3 months.

Still as shown in FIG. 1, the authorization management apparatus 300 is further provided with an authorization management unit 330. The authorization management unit 330 determines, at least based on the selected authorization mode, whether the authorization request information from the personal mobile terminal is allowed to be authorized. As an example, if the selecting unit 320 selects the authorization mode (a), the authorization management unit 330 determines, at least based on the selected authorization mode (a), that authorization request information from the personal mobile terminals 200 is fully automatically allowed to be authorized/forbidden to be authorized. If the selecting unit 320 selects the authorization mode (b), the authorization management unit 330 determines, at least based on the selected authorization mode (b), that authorization request information corresponding to some personal mobile terminals 200 and/or elevators 101 is automatically allowed to be authorized/forbidden to be authorized in batches. If the selecting unit 320 selects the authorization mode (c), the authorization management unit 330 manually determines one by one, at least based on the selected authorization mode (c), that each piece of authorization request information is allowed to be authorized or forbidden to be authorized.

In an embodiment, if the authorization request information is from the personal mobile terminal 200 in the embodiment as shown in FIG. 1 and each piece of authorization request information includes an elevator identifier acquired by the personal mobile terminal 200 and a terminal identifier of the personal mobile terminal 200 mapped to the elevator identifier, the authorization management unit 330 can be further configured to determine, at least according to a mapping relationship between the elevator identifier 102 and the terminal identifier of the personal mobile terminal 200 in the authorization request information, whether the authorization request information from the corresponding personal mobile terminal 200 is allowed to be authorized.

In an embodiment, as shown in the following Table 1, the authorization management unit 330 is further configured to display multiple pieces of the authorization request information in a list form as shown in Table 1. As such, it is convenient for the manager to master the authorization request information and perform the authorization operation manually.

**Table 1**

| Elevator identifier | Floors requested to be authorized | Terminal identifier | Request time | Authorization operation |
|---|---|---|---|---|
| 10-A | 1 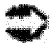 9 | 130XXXXXXXX | 2017-10-31 | 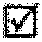 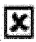 |
| 10-B | B 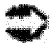 19 | 131XXXXXXXX | 2017-10-31 | 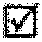 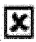 |
| 01-C | 9 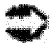 1 | 132XXXXXXXX | 2017-10-31 | 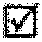 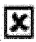 |
| 20-D | 1 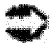 12 | 133XXXXXXXX | 2017-10-30 | 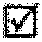 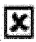 |
| 20-A | 7 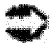 11 | 134XXXXXXXX | 2017-10-29 | 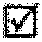 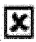 |

As shown in Table 1, the "elevator identifier" and the "terminal identifier" of the authorization request information correspond to or are mapped to each other in the same row, and the authorization request information also includes items such as "Floors requested to be authorized" and "request time," which are presented in the form of a list. Taking the first row as an example, 10-A refers to Elevator No. A in the 10th building of a community; it is another manifestation of the QR code 102a of the elevator 101a as shown in FIG. 2, and can be read by the manager conveniently. "1 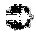 9" represents input floors requested to be authorized as shown in FIG. 3, that is, the 1st floor and 9th floor; "130XXXXXXXX" is a communication number of the personal mobile terminal 200 that scans the QR code 102a, and represents a terminal identifier; "2017-10-31" represents a request time.

It should be noted that the arrangement form of the authorization request information in the list is not limited to the example shown in Table 1. For example, the authorization request information can be arranged to according to a chronological order of the request time. Authorization request information corresponding to the same elevator system or the same elevator can be classified and arranged together, or the authorization request information can be classified and arranged according to terminal identifiers and floors requested to be authorized.

Still as shown in Table 1, the authorization management unit 330 is configured to display multiple pieces of the authorization request information in a list form (for example, the form shown in Table 1) when determining based on the selected authorization mode (c) whether the authorization request information is allowed to be authorized. The list is further provided with an "authorization operation" column. The authorization operation column has icons (for example, " 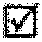 " " and " 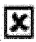 ") that are set corresponding to each piece of authorization request information and capable of being clicked or activated by the manual input. By operating on the authorization operation column, the manager can determine whether to allow authorizing the authorization request information in the corresponding row. For example, when the manager clicks or activates " 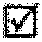 ," it indicates that the authorization request information is allowed to be authorized; when the manager clicks or activates " 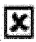 ," it indicates that the authorization request information is not authorized, that is, the current request of the personal mobile terminal 200 is not authorized.

It should be noted that when the selecting unit 320 selects the authorization mode (a) or (b), the authorization management unit 330 can display multiple pieces of the authorization request information in a list form as shown in Table 1. Thus, the manager can conveniently view the authorization request information that is automatically allowed to be authorized/forbidden to be authorized. However, the authorization operation column for manual authorization may not be set in Table 1.

In an embodiment, after it is determined based on the authorization mode (a) or the authorization mode (b) whether the authorization request information is allowed to be authorized, if needing to manually verify or update the authorization request information for which it has been determined whether authorization is allowed, the manager can continue the selection step by using the selecting unit 320 as shown in FIG. 4 to select the authorization mode (c) and manually update, based on the authorization mode (c), at least part of the authorization request information determined based on the authorization mode (a) or the authorization mode (b) to determine whether the at least part of the authorization request information is allowed to be authorized.

Still as shown in FIG. 1, after the authorization operation is completed in the authorization management apparatus 300, the authorization management apparatus 300 will return an "authorization result" to the personal mobile terminal 200, for example, authorization allowed or authorization forbidden. The personal mobile terminal 200 can display the authorization result.

As an example, if the authorization request information in the first row of Table 1 sent by the personal mobile terminal 200 is allowed to be authorized, the personal mobile terminal 200 will obtain a permission of automatically requesting an elevator service on the 1st floor and the 9th floor of the elevator 101a. For example, the personal mobile terminal 200 can automatically send an elevator service request command indicating an elevator call operation.

It will be appreciated that if the authorization request information does not include a floor requested to be authorized, the personal mobile terminal 200 will obtain a permission of requesting an elevator service on each floor of the elevator 101a.

In an embodiment, in a situation where the elevators 101 are classified into elevator groups according to the above example and authorization request information of a personal mobile terminal 200 corresponding to an elevator in an elevator group is allowed to be authorized, the personal mobile terminal 200 can be authorized to send an elevator service request command to another elevator in the elevator group. In other words, an "authorization result" of authorization request information of a personal mobile terminal 200 corresponding to an elevator in an elevator group can be shared and applied to another elevator in the elevator group. As an example, if the personal mobile terminal 200 obtains a permission of automatically requesting an elevator service in the elevator 101a, the personal mobile terminal 200 will automatically obtain, according to a group relationship between the elevator 101a and the elevator 101b as shown in FIG. 2, a permission of automatically requesting an elevator service in the elevator 101b.

FIG. 5 is a schematic diagram of an elevator system to which a personal mobile terminal is applied according to an embodiment of the present invention. The personal mobile terminal 200 is further configured to be capable of automatically sending an elevator service request command to a corresponding elevator of the elevator system 10 if the authorization request information is allowed to be authorized. In other words, the authorized personal mobile terminal 200 can automatically complete an elevator service request in the elevator system 10 in the example as shown in FIG. 5.

As shown in FIG. 5, the elevator system 10 can be mounted in various buildings. The elevator system 10 includes multiple elevator cars 110 that travel up and down in hoistways of a building. FIG. 1 shows two elevator cars, that is, elevator cars 110-1 and 110-2. Each elevator car 110 is under control (such as scheduling control or travel control) of an elevator controller 140 in the elevator system 10 to travel in the hoistway or stop at a corresponding landing. Generally, the elevator controller 140 needs to acquire an elevator service request command (such as an elevator service request command indicating an elevator call request, that is, an elevator call request command) from an elevator landing zone 410 on each floor, thus controlling operation of the elevator based on the command, for example, controlling scheduling of each elevator car 110. It will be appreciated that a specific manner or principle in which the elevator controller 140 controls one or more elevator cars 110 is not limited, and the specific structure, arrangement form and the like of the elevator controller 140 are not limited either.

To acquire the elevator call request command from each elevator landing zone 410, the elevator system 10 is provided with a first wireless beacon 120. The first wireless beacon 120 can be mounted in various elevator landing zones 410 of the elevator system 10 (as shown in FIG. 2). For example, at least one first wireless beacon 120 is mounted in an elevator landing zone of each floor, so that a first wireless signal 123 sent or broadcast by the first wireless beacon 120 can substantially cover each elevator landing zone effectively, thus forming a corresponding coverage.

Still as shown in FIG. 5, in an embodiment, the automatic elevator call system 20 of the elevator system 10 can be further provided with one or more second wireless beacons 130 (such as second wireless beacons 130-1 and 130-2). Each second wireless beacon 130 is mounted in a corresponding elevator car 110. For example, the elevator car 110-1 is provided with a second wireless beacon 130-1, and the elevator car 110-2 is provided with a second wireless beacon 130-2. In an embodiment, the second wireless beacon is mounted on a destination floor registration control panel in the elevator car 110 and integrated onto the destination floor registration control panel. The mounting manner of the second wireless beacon 130 relative to the elevator car 110 is not limited to the above example.

The second wireless beacon 130 can transmit or broadcast a second wireless signal 133, for example, continuously (e.g., at relatively short intervals) broadcast the second wireless signal 133. The signal strength of the broadcast second wireless signal 133 attenuates with its propagation distance. The second wireless signal 133 broadcast by the second wireless beacon 130 can substantially effectively cover an area in the elevator car 110 where the second wireless beacon 130 is mounted, thus forming a corresponding coverage.

It should be noted that the second wireless beacon 130 is coupled to the elevator controller 140. Therefore, during the operation of each elevator car 110, the second wireless beacon 130 can acquire desired information, such as current floor information and travel direction information of the elevator car 110, from the elevator controller 140 in real time and package the floor information and/or the travel direction information (the travel direction information includes, for example, "travel up," "travel down" and "halt") into a Bluetooth data signal to be broadcast as a second wireless signal.

In an embodiment, the first wireless beacon 120 and/or the second wireless beacon 130 may be a Bluetooth module, which may specifically be a Bluetooth Low Energy (BLE) module. Correspondingly, the first wireless signal 123 transmitted or broadcast by the first wireless beacons 120 and/or the second wireless signal 133 transmitted or broadcast by the second wireless beacons 130 may be a Bluetooth signal (such as a BLE signal).

In an embodiment, the first wireless signal 123 (such as a BLE signal) may include a wakeup signal for waking up the personal mobile terminal 200. The personal mobile terminal 200 sensing the wakeup signal may wake up a corresponding application component (such as an automatic elevator call APP) of the personal mobile terminal 200 to work. Specifically, the first wireless signal 123 may further include a Universally Unique Identifier (UUID) that reflects the identity of the first wireless beacon 120, and/or a data signal indicating location information of a floor on which the first wireless beacon 120 is located, and the second wireless signal 133 may further include a Universally Unique Identifier (UUID) that reflects the identity of the second wireless beacon 130, and/or a data signal indicating location information of a current floor on which the second wireless beacon 130 is located.

Still as shown in FIG. 5, the elevator system 10 may include personal mobile terminals 200 carried by passengers 90, for example, personal mobile terminals 200-1 and 200-2 carried by two passengers respectively. Each personal mobile terminal 200 is configured to be capable of sensing the wireless signals broadcast by the wireless beacons in the elevator system 10 when a distance condition is met, for example, sensing the first wireless signal 123 broadcast by the first wireless beacon 120 and sensing the second wireless signal 133 broadcast by the second wireless beacon 130. Moreover, in an embodiment, each authorized personal mobile terminal 200 can automatically send corresponding elevator service request commands to the wireless beacons in the elevator system 10 when a corresponding condition is met, for example, send an elevator service request command indicating an elevator call to the first wireless beacon 120 and send an elevator service request command indicating a destination floor to the second wireless beacon 130.

The personal mobile terminal 200 in the above embodiments can easily acquire an elevator identifier and mapping data between the elevator identifier and a terminal identifier, and generate and send authorization request information conveniently. Correspondingly, the authorization management apparatus 300 can conveniently obtain the mapping data between the elevator identifier and the terminal identifier from the authorization request information, so that it is easy to know which elevator should authorize which passenger, thus realizing access management of the elevator system easily, and authorization operations can also be displayed easily. In particular, the elevator management system 20 in the above examples does not need to authorize and manage each passenger 90 face to face, and the entire authorization request process and the authorization management process are fast, convenient and efficient.

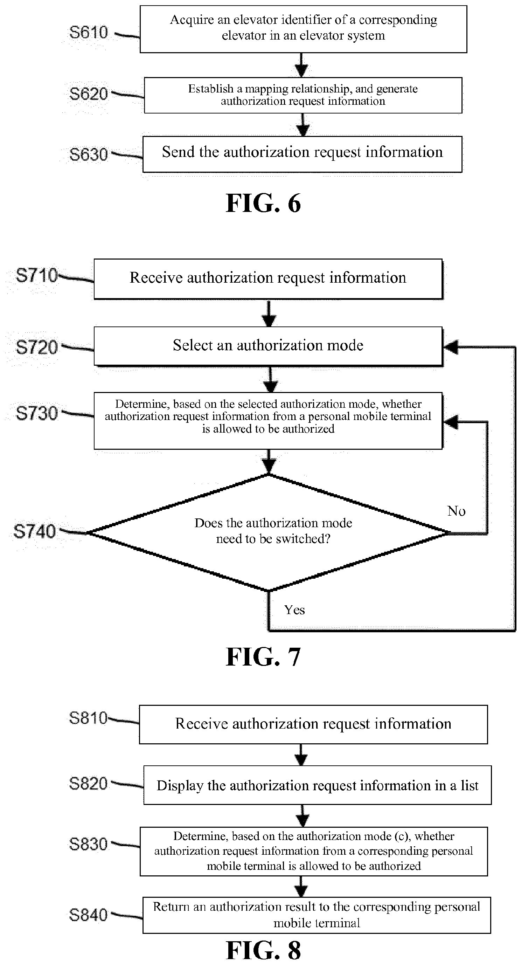

FIG. 6 is a flowchart of an authorization management method for an elevator service request according to an embodiment of the present invention. The authorization management method shown in FIG. 6 is mainly completed in the personal mobile terminal 200 as shown in FIG. 1. The authorization management method is illustrated below with reference to FIGs. 1-3 and FIG. 6.

In step S610, an elevator identifier of a corresponding elevator in an elevator system is acquired. In a scenario as shown in FIG. 2, if a passenger 90 wants to get access to an elevator 101a, that is, obtain the authorization of sending an elevator service request command to the elevator 101a, the passenger 90 can scan a QR code 102a, that is, an elevator identifier 102a, of the elevator 101a by using an acquiring unit 220 of the personal mobile terminal 200, thus acquiring the elevator identifier of the elevator 101a. Other related information of the elevator 101a can also be obtained.

In step S620, a mapping relationship is established, and authorization request information is generated. In this step, as the terminal identifier of the personal mobile terminal 200 is known to or pre-stored in the personal mobile terminal 200, a mapping relationship between the terminal identifier and the elevator identifier of the elevator 101a can be established to form mapping data after the elevator identifier of the elevator 101a is acquired. That is, the terminal identifier is mapped to the elevator identifier 102a or the elevator identifier 102a is mapped to the terminal identifier. Further, authorization request information including the mapping relationship is generated. The authorization request information includes, for example, the elevator identifier 102a, the terminal identifier as well as the mapping relationship between them. In other embodiments, the authorization request information can further include identity credential information (such as an ID card image required in the authorization verification process) of a passenger 90 and/or a floor requested to be authorized (such as information of multiple floors input in FIG. 3).

In step S630, the authorization request information is sent. In this step, the authorization request information generated by the personal mobile terminal 200 can be remotely sent to the authorization management apparatus 300.

The above steps S610 to S630 illustrate the main process of one authorization request. By repeating the above steps S610 to S630, multiple authorization requests can be completed, for example, an authorization request for different floors of the same elevator, an authorization request for different elevators, and even an authorization request for different time periods of the same elevator (for example, an authorization request is made again after the authorization expires). It will be appreciated that the entire authorization request process is simple and convenient, and is conducive to improving passenger experience.

FIG. 7 is a flowchart of an authorization management method for an elevator service request according to an embodiment of the present invention. The authorization management method shown in FIG. 7 is mainly completed in the authorization management apparatus 300 as shown in FIG. 1. The authorization management method is illustrated below with reference to FIG. 4 and FIG. 7.

In step S710, authorization request information from one or more personal mobile terminals 200 is received.

In step S720, an authorization mode is selected.

In an embodiment, an authorization mode is selected from at least two of the following three authorization modes (for example, one authorization mode is selected):
(a) fully auto-allowed authorization or fully auto-forbidden authorization,
(b) auto-allowed authorization or auto-forbidden authorization in batches, and
(c) allowed authorization or forbidden authorization fully based on manual input.

Three authorization modes are listed on a selection interface of the selecting unit 320 as shown in FIG. 4, "fully auto-allowed authorization" at Level 1 corresponds to a specific example of the above authorization mode (a), "auto-allowed authorization in batches" at Level 2 corresponds to a specific example of the above authorization mode (b), and "allowed authorization based on manual input" at Level 3 corresponds to a specific example of the above authorization mode (c). A manager can select one authorization mode according to a prompt, for example, the authorization mode (b) corresponding to Level 2 is selected.

It will be appreciated that in another alternative embodiment, the selection interface can also list the following combinations of authorization modes: authorization mode (a) and authorization mode (b); authorization mode (b) and authorization mode (c); or authorization mode (a) and authorization mode (c). The selecting unit 320 can select one of the above combinations of authorization modes based on the input of the manager.

At the time of selection, if the elevator or elevator system or elevator group has no access restriction, fully auto-allowed authorization in the authorization mode (a) can be selected; or if the elevator or elevator system or elevator group has an access-forbidden restriction in a current time period, fully auto-forbidden authorization in the authorization mode (a) can be selected.

At the time of selection, if the elevator or elevator system or elevator group has no access restriction for a predefined personal mobile terminal for which authorization is allowed automatically, auto-allowed authorization in batches in the authorization mode (b) can be selected; or if the elevator or elevator system or elevator group has an access-forbidden restriction for a predefined personal mobile terminal for which authorization is forbidden automatically, auto-forbidden authorization in the authorization mode (b) can be selected.

At the time of selection, if the elevator or elevator system or elevator group needs to have an access restriction to each personal mobile terminal, the authorization mode (c) can be selected.

When the authorization mode (b) is selected, a list of first terminal identifiers of personal mobile terminals 200 for allowing authorization automatically in batches and/or a list of second terminal identifiers of personal mobile terminals 200 for forbidding authorization automatically in batches are/is further acquired. In the example as shown in FIG. 4, a list of first terminal identifiers of personal mobile terminals 200 for allowing authorization automatically in batches that is pre-stored in the authorization management apparatus 300 can be browsed and acquired from the authorization management apparatus 300. Specifically, terminal identifiers (such as communication numbers) of personal mobile terminals 200 that have no access restriction to, for example, the elevator 101a or all the elevators are listed in the list of first terminal identifiers. As such, all authorization request information of the terminal identifiers corresponding to the terminal identifiers in the list of first terminal identifiers can be allowed to be authorized in batches in the authorization management unit 330. A similar exemplary operation can also be performed for the list of second terminal identifiers.

It will be appreciated that the remaining authorization request information not processed in the authorization mode (b) can be manually processed in the authorization mode (c).

In an embodiment, a corresponding authorization mode is selected for different elevators or different elevator systems or different elevator groups. For example, the authorization mode (a) is selected corresponding to authorization request information of elevators in a predefined elevator group M, the authorization mode (b) is selected corresponding to authorization request information of elevators in a predefined elevator group N, and the authorization mode (c) is selected corresponding to authorization request information of elevators in a predefined elevator group F.

In an embodiment, a time limit of the selected authorization mode is further input in the selection step, that is, a time limit of the selected authorization mode can be set. As an example, as shown in FIG. 4, "time for auto-allowed authorization" in the authorization mode at "Level 2" selected is set to 3 months.

In step S730, it is determined based on the selected authorization mode whether authorization request information from the personal mobile terminal is allowed to be authorized. As an example, if the authorization mode (a) is selected, it is determined at least based on the selected authorization mode (a) that authorization request information from the personal mobile terminals 200 is fully automatically allowed to be authorized/forbidden to be authorized. If the authorization mode (b) is selected, it is determined at least based on the selected authorization mode (b) that authorization request information corresponding to some personal mobile terminals 200 and/or elevators 101 is automatically allowed to be authorized/forbidden to be authorized in batches. If the authorization mode (c) is selected, it is manually determined one by one, at least based on the selected authorization mode (c), that each piece of authorization request information is allowed to be authorized or forbidden to be authorized. For example, by operating on the "authorization operation" column shown in Table 1, the manager can determine whether to allow authorizing the authorization request information in the corresponding row. When the manager clicks or activates " 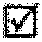 ," it indicates that the authorization request information is allowed to be authorized; when the manager clicks or activates " 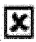 " it indicates that the authorization request information is not authorized.

In step S730, the authorization operation based on the selected authorization mode can be continued within the time limit of the currently selected authorization mode. If the time limit expires, step S740 can be performed to judge whether the authorization mode needs to be switched. If the judgment is result is "yes," step S720 is performed again. If the judgment is "no," the authorization operation is continued based on the authorization mode in step S730. Of course, according to a specific situation, the manager can also actively trigger step S740 to re-select an authorization mode.

It should be noted that in an embodiment, after it is determined based on the authorization mode (a) or authorization mode (b) whether the authorization request information is allowed to be authorized in step S730, if the selection step S720 is continued to select the authorization mode (c), and at least part of the authorization request information determined based on the authorization mode (a) or the authorization mode (b) is manually updated based on the selected authorization mode (c) to determine whether the at least part of the authorization request information is allowed to be authorized, that is, step S730 is performed by changing the authorization mode to the authorization mode (c).

So far, the process of the authorization management method illustrated above has basically ended. It will be appreciated that due to the introduction of the selection step into the authorization management method for an elevator service request, the manager can select an authorization mode flexibly according to a specific situation. For example, the manager can select different authorization modes for authorization request information of different elevators, select different authorization modes for authorization request information in different time periods of the same elevator, select different authorization modes for authorization request information of different floors of the same elevator, and so on. Thus, the authorization of authorization request information by manager is much more flexible, which brings convenience to the manager.

FIG. 8 is a flowchart of an authorization management method for an elevator service request according to another embodiment of the present invention. The authorization management method shown in FIG. 8 is mainly completed in the authorization management apparatus 300 as shown in FIG. 1. The authorization management method is illustrated below with reference to Table 1 and FIG. 8.

In step S810, authorization request information from one or more personal mobile terminals 200 is received.

In step S820, the authorization request information is displayed in a list. For example, multiple pieces of the authorization request information are displayed in a list form shown in Table 1 above. A mapping relationship between an elevator identifier and a terminal identifier will also be directly presented to a manager. The manager can easily perform an authorization operation according to existing information.

In step S830, it is determined whether authorization request information from a corresponding personal mobile terminal is allowed to be authorized. In this step, each piece of authorization request information is manually authorized one by one based on the selected authorization mode (c), that is, allowed authorization or forbidden authorization fully based on manual input. For example, by operating on the "authorization operation" column shown in Table 1, the manager can determine whether to allow authorizing the authorization request information in the corresponding row. When the manager clicks or activates " 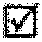 ," it indicates that the authorization request information is allowed to be authorized; when the manager clicks or activates " 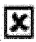 ," it indicates that the authorization request information is not authorized.

In an embodiment, in this step, it is determined at least based on a mapping relationship between the elevator identifier and the terminal identifier in the authorization request information whether the authorization request information from the corresponding personal mobile terminal is allowed to be authorized. As an example, in the first row as shown in Table 1, it can be determined, according to information about the terminal identifier 200 which is stored in the authorization management apparatus 300, whether an elevator service request for the elevator identifier "10-A" corresponding to the terminal identifier 200 is allowed to be authorized. If authorization is allowed, " 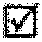 " in the "authorization operation" column is activated. If authorization is not allowed, " 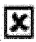 " in the "authorization operation" column is activated.

In step S840, an authorization result is returned to the corresponding personal mobile terminal 200.

So far, the process of the authorization management method completed based on manual input of the manager has basically ended.

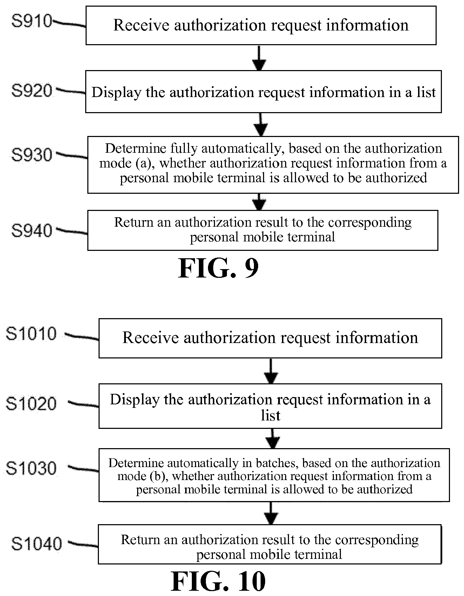

FIG. 9 is a flowchart of an authorization management method for an elevator service request according to yet another embodiment of the present invention. The authorization management method shown in FIG. 9 is mainly completed in the authorization management apparatus 300 as shown in FIG. 1. The authorization management method is illustrated below with reference to FIG. 1 and FIG. 9.

In step S910, authorization request information from one or more personal mobile terminals 200 is received.

In step S920, the authorization request information is displayed in a list. For example, multiple pieces of the authorization request information are displayed in a list form shown in Table 1 above. A mapping relationship between an elevator identifier and a terminal identifier will also be directly presented to a manager. In another embodiment, the authorization request information may not be displayed according to a specific situation.

In step S930, it is fully automatically determined based on the authorization mode (a) whether the authorization request information from the personal mobile terminal is allowed to be authorized. In this step, all the authorization request information is authorized automatically based on the selected authorization mode (a), that is, fully auto-allowed authorization or fully auto-forbidden. For example, all the authorization request information is automatically allowed to be authorized, or all the authorization request information is automatically forbidden to be authorized.

In step S940, an authorization result is returned to the corresponding personal mobile terminal 200.

So far, the process of completing the authorization management method fully automatically without relying on a manager has basically ended.

FIG. 10 is a flowchart of an authorization management method for an elevator service request according to still another embodiment of the present invention. The authorization management method shown in FIG. 10 is mainly completed in the authorization management apparatus 300 as shown in FIG. 1. The authorization management method is illustrated below with reference to FIG. 1 and FIG. 10.

In step S1010, authorization request information from one or more personal mobile terminals 200 is received.

In step S1020, the authorization request information is displayed in a list. For example, multiple pieces of the authorization request information are displayed in a list form. A mapping relationship between an elevator identifier and a terminal identifier will also be directly presented to a manager. In another embodiment, the authorization request information may not be displayed according to a specific situation.

In step S1030, it is determined fully automatically based on the authorization mode (b) whether the authorization request information from the personal mobile terminal is allowed to be authorized. In this step, the authorization request information is authorized automatically in batches based on the selected authorization mode (b), that is, auto-allowed authorization in batches or auto-forbidden authorization. For example, all the authorization request information is automatically allowed to be authorized, or all the authorization request information is automatically forbidden to be authorized.

In an embodiment, a list of first terminal identifiers of personal mobile terminals 200 for allowing authorization automatically in batches and/or a list of second terminal identifiers of personal mobile terminals 200 for forbidding authorization automatically in batches are/is acquired. In the example as shown in FIG. 4, a list of first terminal identifiers of personal mobile terminals 200 for allowing authorization automatically in batches that is pre-stored in the authorization management apparatus 300 can be browsed and acquired from the authorization management apparatus 300. Specifically, terminal identifiers (such as communication numbers) of personal mobile terminals 200 that have no access restriction to, for example, the elevator 101a or all the elevators are listed in the list of first terminal identifiers. As such, all authorization request information of the terminal identifiers corresponding to the terminal identifiers in the list of first terminal identifiers can be allowed to be authorized in batches in the authorization determining process. A similar exemplary operation can also be performed for the list of second terminal identifiers.

In step S1040, an authorization result is returned to the corresponding personal mobile terminal 200.

So far, the process of completing the authorization management method automatically in batches has basically ended.

It should be noted that at least two processes of the methods shown in FIG. 8 to FIG. 10 above can be carried out in the same authorization management apparatus 300. For example, the authorization management apparatus 300 manages authorization request information corresponding to Elevator A, Elevator B and Elevator C. The authorization mode (c) is selected for the Elevator A and authorization management for the authorization request information is completed based on the authorization management method shown in FIG. 8. The authorization mode (a) is selected for the Elevator B and authorization management for the authorization request information is completed based on the authorization management method shown in FIG. 9. The authorization mode (b) is selected for the Elevator C and authorization management for the authorization request information is completed based on the authorization management method shown in FIG. 10.

It will be appreciated that the authorization request information processed in the authorization management apparatus 300 and/or the authorization management method illustrated above is not limited to the aforementioned authorization request information which includes an acquired elevator identifier and a terminal identifier of a personal mobile terminal mapped to the elevator identifier and may also be other types of authorization request information.

It should be noted that the personal mobile terminal 200 according to the above embodiments of the present invention can be implemented by using computer program instructions, e.g., implemented by a special APP. These computer program instructions may be provided to a processor of a general-purpose computer, a special-purpose computer, or another programmable data processing device to form the personal mobile terminal 200 according to the embodiments of the present invention. Moreover, units or components for implementing functions/operations designated in the flowcharts and/or blocks and/or one or more flowchart blocks can be created with the instructions executed by the processor of the computer or another programmable data processing device.

It should be noted that the authorization management apparatus 300 according to the above embodiments of the present invention can be implemented by using computer program instructions, for example, implemented by a special computer program, and these computer program instructions can be provided to a processor of a general-purpose computer, a special-purpose computer, or another programmable data processing device to form the authorization management apparatus 300 according to the embodiments of the present invention. Moreover, units or components for implementing functions/operations designated in the flowcharts and/or blocks and/or one or more flowchart blocks can be created with the instructions executed by the processor of the computer or another programmable data processing device.

Besides, these computer program instructions may be stored in a computer readable memory. These instructions can instruct the computer or another programmable processor to implement the functions in specific manners, such that these instructions stored in the computer readable memory construct a product including instruction components for implementing functions/operations designated in one or more blocks of the flowcharts and/or block diagrams.

It should be further noted that in some alternative implementations, the functions/operations shown in the blocks may not take place according to the sequence shown in the flowchart. For example, two blocks shown sequentially may be performed substantially at the same time, or these blocks sometimes may be performed in a reversed order, which specifically depends on the functions/operations involved.

It should be noted that elements (including the flowcharts and block diagrams in the accompanying drawings) disclosed and depicted in this text refer to logic boundaries between elements. However, according to software or hardware engineering practices, the depicted elements and functions thereof can be executed on a machine by a computer executable medium. The computer executable medium has a processor that can execute a program instruction stored thereon. The program instruction serves as a single-chip software structure, an independent software module, or a module using an external program, code, service or the like, or any combination thereof. Moreover, all these execution solutions may fall within the scope of the present disclosure.

Although different non-limitative implementation solutions have components that are specifically illustrated, the implementation solutions of the present invention are not limited to these specific combinations. Some of the components or features from any non-limitative implementation solution may be combined with features or components from any other non-limitative implementation solution.

Although specific step sequences are shown, disclosed and required, it should be understood that the steps may be implemented in any sequence, separated, or combined, and they will still benefit from the present disclosure unless otherwise specified.

The foregoing descriptions are exemplary and are not defined to be limitative. Various non-limitative implementation solutions are disclosed in this text; however, according to the foregoing teachings, those of ordinary skill in the art will be aware that various modifications and variations shall fall within the scope of the appended claims. Therefore, it should be understood that disclosure content other than those specifically disclosed can be implemented within the scope of the appended claims. Therefore, the appended claims should be read up to determine the actual scope and content.

## Claims

1. An authorization management apparatus (300) for an elevator service request, comprising:
a receiving unit (310) configured to receive authorization request information from one or more personal mobile terminals (200); **characterized in that**:
the authorization management apparatus further comprises a selecting unit (320) configured to select an authorization mode from at least two of the following three authorization modes:
(a) fully auto-allowed authorization or fully auto-forbidden authorization,
(b) auto-allowed authorization or auto-forbidden authorization in batches, and
(c) allowed authorization or forbidden authorization fully based on manual input; and
an authorization management unit (330) configured to determine, at least based on the selected authorization mode, whether the authorization request information from the personal mobile terminal is allowed to be authorized;
wherein the selecting unit is further configured to acquire a list of first terminal identifiers of personal mobile terminals for allowing authorization automatically in batches and/or a list of second terminal identifiers of personal mobile terminals for forbidding authorization automatically in batches when the authorization mode (b) is selected.

2. The authorization management apparatus (300) of claim 1, wherein the authorization request information comprises an elevator identifier (102a, 102b) of a corresponding elevator (101a, 101b) of an elevator system acquired by the corresponding personal mobile terminal (200) and a terminal identifier of the personal mobile terminal mapped to the elevator identifier; and preferably wherein the authorization management unit (330) is further configured to determine, at least also based on a mapping relationship between the elevator identifier and the terminal identifier in the authorization request information, whether the authorization request information from the corresponding personal mobile terminal is allowed to be authorized.

3. The authorization management apparatus (300) of claim 1 or 2, wherein the selecting unit (320) is further configured to select a corresponding authorization mode for different elevators (101a, 101b) or different elevator systems or different elevator groups.

4. The authorization management apparatus (300) of any preceding claim, wherein the authorization management unit (330) is further configured to display multiple pieces of the authorization request information in a list form when it is determined based on the selected authorization mode (c) whether the authorization request information is allowed to be authorized; and preferably wherein the list comprises an authorization operation column having an icon that is set corresponding to each piece of authorization request information and capable of being clicked or activated by the manual input.

5. The authorization management apparatus (300) of any preceding claim, wherein the authorization management unit (330) is further configured to: when the authorization request information of the personal mobile terminal (200) corresponding to an elevator (101a, 101b) in an elevator group is allowed to be authorized, allow authorizing the personal mobile terminal to send an elevator service request command to another elevator in the elevator group.

6. The authorization management apparatus (300) of any preceding claim, wherein the authorization request information further comprises identity credential information of a passenger (90) and/or a floor requested to be authorized.

7. An authorization management method for an elevator service request, comprising steps of:
receiving authorization request information from one or more personal mobile terminals (200); **characterized by** the method further comprising:
selecting an authorization mode from at least two of the following three authorization modes:
(a) fully auto-allowed authorization or fully auto-forbidden authorization,
(b) auto-allowed authorization or auto-forbidden authorization in batches, and
(c) allowed authorization or forbidden authorization fully based on manual input; and
determining, at least based on the selected authorization mode, whether the authorization request information from the personal mobile terminal is allowed to be authorized; and preferably wherein in the selection step, a corresponding authorization mode is selected for different elevators (101a, 101b) or different elevator systems or different elevator groups;
wherein in the selection step, when the authorization mode (b) is selected, a list of first terminal identifiers of personal mobile terminals for allowing authorization automatically in batches and/or a list of second terminal identifiers of personal mobile terminals for forbidding authorization automatically in batches are/is acquired.

8. The authorization management method of claim 7, wherein in the selection step, if the elevator (101a, 101b) or elevator system or elevator group has no access restriction, fully auto-allowed authorization in the authorization mode (a) is selected; or
if the elevator or elevator system or elevator group has an access-forbidden restriction in a current time period, fully auto-forbidden authorization in the authorization mode (a) is selected.

9. The authorization management method of claim 7, wherein in the selection step, if the elevator (101a, 101b) or elevator system or elevator group has no access restriction for a predefined personal mobile terminal (200) for which authorization is allowed automatically, auto-allowed authorization in batches in the authorization mode (b) is selected; or
if the elevator or elevator system or elevator group has an access-forbidden restriction for a predefined personal mobile terminal for which authorization is forbidden automatically, auto-forbidden authorization in the authorization mode (b) is selected.

10. The authorization management method of claim 7, wherein in the selection step, if the elevator (101a, 101b) or elevator system or elevator group needs to have an access restriction for each personal mobile terminal (200), the authorization mode (c) is selected.

11. The authorization management method of claim 7, wherein after it is determined based on the authorization mode (a) or the authorization mode (b) whether the authorization request information is allowed to be authorized, the selection step is continued to select the authorization mode (c), and at least part of the authorization request information determined based on the authorization mode (a) or the authorization mode (b) is updated based on the selected authorization mode (c) to determine whether the at least part of the authorization request information is allowed to be authorized.

12. The authorization management method of any of claims 7 to 11, wherein the elevator identifier is a QR code or barcode; and/or wherein the terminal identifier is a communication number, a unique identification code of the personal mobile terminal (200) or an ID of a passenger (90) using the personal mobile terminal; and/or wherein the authorization request information further comprises identity credential information of a passenger and/or a floor requested to be authorized.

13. An elevator management system (20), for managing a personal mobile terminal (200) configured to send an elevator service request command automatically, wherein the elevator management system comprises the authorization management apparatus (300) of any of claims 1 to 6; and preferably wherein the personal mobile terminal comprises:
an acquiring unit configured to acquire an elevator identifier (102a, 102b) of a corresponding elevator (101a, 101b) of an elevator system; and
an authorization request generating and sending unit configured to generate and send authorization request information, wherein the authorization request information comprises the acquired elevator identifier and a terminal identifier of the personal mobile terminal mapped to the elevator identifier.

## Patentansprüche

1. Berechtigungsverwaltungsvorrichtung (300) für eine Aufzugdienstanforderung, umfassend:
eine Empfangseinheit (310), die dazu konfiguriert ist, Berechtigungsanforderungsinformationen von einem oder mehreren persönlichen mobilen Endgeräten (200) zu empfangen; **dadurch gekennzeichnet, dass**:
die Berechtigungsverwaltungsvorrichtung ferner eine Auswahleinheit (320) umfasst, die dazu konfiguriert ist, einen Berechtigungsmodus aus mindestens zwei der folgenden drei Berechtigungsmodi auszuwählen:
(a) vollständig automatisch zugelassene Berechtigung oder vollständig automatisch nicht zugelassene Berechtigung,
(b) automatisch zugelassene Berechtigung oder automatisch nicht zugelassene Berechtigung in Gruppen, und
(c) zugelassene Berechtigung oder nicht zugelassene Berechtigung vollständig basierend auf einer manuellen Eingabe; und
eine Berechtigungsverwaltungseinheit (330), die dazu konfiguriert ist, mindestens teilweise basierend auf dem ausgewählten Berechtigungsmodus zu bestimmen, ob die Berechtigungsanforderungsinformationen von dem persönlichen mobilen Endgerät zur Berechtigung zugelassen sind;
wobei die Auswahleinheit ferner dazu konfiguriert ist, eine Liste von ersten Endgerätekennungen von persönlichen mobilen Endgeräten zum automatischen Zulassen der Berechtigung in Gruppen und/oder eine Liste von zweiten Endgerätekennungen von persönlichen mobilen Endgeräten zum automatischen Nichtzulassen der Berechtigung in Gruppen zu erfassen, wenn der Berechtigungsmodus (b) ausgewählt wird.

2. Berechtigungsverwaltungsvorrichtung (300) nach Anspruch 1, wobei die Berechtigungsanforderungsinformationen eine Aufzugkennung (102a, 102b) eines entsprechenden Aufzugs (101a, 101b) eines Aufzugsystems, die durch das entsprechende persönliche mobile Endgerät (200) erfasst wird, und eine Endgerätekennung des persönlichen mobilen Endgerätes, das der Aufzugkennung zugeordnet ist, umfassen; und vorzugsweise wobei die Berechtigungsverwaltungseinheit (330) ferner dazu konfiguriert ist, mindestens ebenfalls basierend auf einer Zuordnungsbeziehung zwischen der Aufzugkennung und der Endgerätekennung in den Berechtigungsanforderungsinformationen zu bestimmen, ob die Berechtigungsanforderungsinformationen von dem entsprechenden persönlichen mobilen Endgerät zur Berechtigung zugelassen sind.

3. Berechtigungsverwaltungsvorrichtung (300) nach Anspruch 1 oder 2, wobei die Auswahleinheit (320) ferner dazu konfiguriert ist, einen entsprechenden Berechtigungsmodus für unterschiedliche Aufzüge (101a, 101b) oder unterschiedliche Aufzugsysteme oder unterschiedliche Aufzuggruppen auszuwählen.

4. Berechtigungsverwaltungsvorrichtung (300) nach einem der vorhergehenden Ansprüche, wobei die Berechtigungsverwaltungseinheit (330) ferner dazu konfiguriert ist, mehrere Teile der Berechtigungsanforderungsinformationen in Listenform anzuzeigen, wenn basierend auf dem ausgewählten Berechtigungsmodus (c) bestimmt wird, ob die Berechtigungsanforderungsinformationen zur Berechtigung zugelassen sind; und vorzugsweise wobei die Liste eine Berechtigungsvorgangsspalte mit einem Symbol umfasst, das entsprechend jedem Teil der Berechtigungsanforderungsinformationen eingestellt ist und durch die manuelle Eingabe angeklickt oder aktiviert werden kann.

5. Berechtigungsverwaltungsvorrichtung (300) nach einem der vorhergehenden Ansprüche, wobei die Berechtigungsverwaltungseinheit (330) ferner zu Folgendem konfiguriert ist: wenn die Berechtigungsanforderungsinformationen des persönlichen mobilen Endgerätes (200), das einem Aufzug (101a, 101b) in einer Aufzuggruppe entspricht, zur Berechtigung zugelassen sind, Zulassen der Berechtigung des persönlichen mobilen Endgerätes, um einen Aufzugdienstanforderungsbefehl an einen anderen Aufzug in der Aufzuggruppe zu senden.

6. Berechtigungsverwaltungsvorrichtung (300) nach einem der vorhergehenden Ansprüche, wobei die Berechtigungsanforderungsinformationen ferner Identitätsanmeldeinformationen eines Passagiers (90) und/oder eines Stockwerks, deren Berechtigung angefordert wird, umfassen.

7. Berechtigungsverwaltungsverfahren für eine Aufzugdienstanforderung, das die folgenden Schritte umfasst:
Empfangen von Berechtigungsanforderungsinformationen von einem oder mehreren persönlichen mobilen Endgeräten (200); **dadurch gekennzeichnet, dass** das Verfahren ferner Folgendes umfasst:
Auswählen eines Berechtigungsmodus aus mindestens zwei der folgenden drei Berechtigungsmodi:
(a) vollständig automatisch zugelassene Berechtigung oder vollständig automatisch nicht zugelassene Berechtigung,
(b) automatisch zugelassene Berechtigung oder automatisch nicht zugelassene Berechtigung in Gruppen, und
(c) zugelassene Berechtigung oder nicht zugelassene Berechtigung vollständig basierend auf einer manuellen Eingabe; und
Bestimmen, mindestens teilweise basierend auf dem ausgewählten Berechtigungsmodus, ob die Berechtigungsanforderungsinformationen von dem persönlichen mobilen Endgerät zur Berechtigung zugelassen sind; und vorzugsweise wobei bei dem Auswahlschritt ein entsprechender Berechtigungsmodus für unterschiedliche Aufzüge (101a, 101b) oder unterschiedliche Aufzugsysteme oder unterschiedliche Aufzuggruppen ausgewählt wird;
wobei bei dem Auswahlschritt, wenn der Berechtigungsmodus (b) ausgewählt wird, eine Liste von ersten Endgerätekennungen von persönlichen mobilen Endgeräten zum automatischen Zulassen zur Berechtigung in Gruppen und/oder eine Liste von zweiten Endgerätekennungen von persönlichen mobilen Endgeräten zum automatischen Nichtzulassen zur Berechtigung in Gruppen erfasst werden/wird.

8. Berechtigungsverwaltungsverfahren nach Anspruch 7, wobei bei dem Auswahlschritt, wenn der Aufzug (101a, 101b) oder das Aufzugsystem oder die Aufzuggruppe keine Zugangsbeschränkung aufweist, die vollständig automatisch zugelassene Berechtigung in dem Berechtigungsmodus (a) ausgewählt wird; oder
wenn der Aufzug oder das Aufzugsystem oder die Aufzuggruppe eine Zugangsbeschränkung in einem aktuellen Zeitraum aufweist, die vollständig automatisch nicht zugelassene Berechtigung in dem Berechtigungsmodus (a) ausgewählt wird.

9. Berechtigungsverwaltungsverfahren nach Anspruch 7, wobei bei dem Auswahlschritt, wenn der Aufzug (101a, 101b) oder das Aufzugsystem oder die Aufzuggruppe keine Zugangsbeschränkung für ein vordefiniertes persönliches mobiles Endgerät (200), für das die Berechtigung automatisch zugelassen wird, aufweist, die automatisch zugelassene Berechtigung in Gruppen in dem Berechtigungsmodus (b) ausgewählt wird; oder
wenn der Aufzug oder das Aufzugsystem oder die Aufzuggruppe eine Zugangsbeschränkung für ein vordefiniertes persönliches mobiles Endgerät, für das die Berechtigung automatisch nicht zugelassen wird, die automatisch nicht zugelassene Berechtigung in dem Berechtigungsmodus (b) ausgewählt wird.

10. Berechtigungsverwaltungsverfahren nach Anspruch 7, wobei bei dem Auswahlschritt, wenn der Aufzug (101a, 101b) oder das Aufzugsystem oder die Aufzuggruppe eine Zugangsbeschränkung für jedes persönliche mobile Endgerät (200) aufweisen muss, der Berechtigungsmodus (c) ausgewählt wird.

11. Berechtigungsverwaltungsverfahren nach Anspruch 7, wobei nachdem basierend auf dem Berechtigungsmodus (a) oder dem Berechtigungsmodus (b) bestimmt wurde, ob die Berechtigungsanforderungsinformationen zur Berechtigung zugelassen sind, der Auswahlschritt fortgesetzt wird, um den Berechtigungsmodus (c) auszuwählen, und wobei mindestens ein Teil der Berechtigungsanforderungsinformationen, die basierend auf dem Berechtigungsmodus (a) oder dem Berechtigungsmodus (b) bestimmt wurden, basierend auf dem ausgewählten Berechtigungsmodus (c) aktualisiert werden, um zu bestimmen, ob der mindestens eine Teil der Berechtigungsanforderungsinformationen zur Berechtigung zugelassen ist.

12. Berechtigungsverwaltungsverfahren nach einem der Ansprüche 7 bis 11, wobei es sich bei der Aufzugkennung um einen QR-Code oder einen Barcode handelt; und/oder wobei es sich bei der Endgerätekennung um eine Kommunikationsnummer, einen eindeutigen Identifikationscode des persönlichen mobilen Endgerätes (200) oder um eine ID eines Passagiers (90), der das persönliche mobile Endgerät verwendet, handelt; und/oder wobei die Berechtigungsanforderungsinformationen ferner Identitätsanmeldeinformationen eines Passagiers und/oder eines Stockwerkes, deren Berechtigung angefordert wird, umfassen.

13. Aufzugverwaltungssystem (20) zum Verwalten eines persönlichen mobilen Endgerätes (200), das dazu konfiguriert ist, automatisch einen Aufzugdienstanforderungsbefehl zu senden, wobei das Aufzugverwaltungssystem die Berechtigungsverwaltungsvorrichtung (300) nach einem der Ansprüche 1 bis 6 umfasst; und vorzugsweise wobei das persönliche mobile Endgerät Folgendes umfasst:
eine Erfassungseinheit, die dazu konfiguriert ist, eine Aufzugkennung (102a, 102b) eines entsprechenden Aufzugs (101a, 101b) eines Aufzugsystems zu erfassen; und
eine Einheit zum Erzeugen und Senden einer Berechtigungsanforderung, die dazu konfiguriert ist, Berechtigungsanforderungsinformationen zu erzeugen und zu senden, wobei die Berechtigungsanforderungsinformationen die erfasste Aufzugkennung und eine Endgerätekennung des persönlichen mobilen Endgerätes, das der Aufzugkennung zugeordnet ist, umfassen.

## Revendications

1. Appareil de gestion d'autorisation (300) pour une demande de service d'ascenseur, comprenant :
une unité de réception (310) conçue pour recevoir des informations de demande d'autorisation provenant d'un ou de plusieurs terminaux mobiles personnels (200) ; **caractérisé en ce que** :
l'appareil de gestion d'autorisation comprend en outre une unité de sélection (320) conçue pour sélectionner un mode d'autorisation parmi au moins deux des trois modes d'autorisation suivants :
(a) autorisation entièrement auto-autorisée ou autorisation entièrement auto-interdite,
(b) autorisation auto-autorisée ou autorisation auto-interdite par lots, et
(c) autorisation autorisée ou autorisation interdite entièrement basée sur une saisie manuelle ; et
une unité de gestion d'autorisation (330) conçue pour déterminer, au moins sur la base du mode d'autorisation sélectionné, si les informations de demande d'autorisation provenant du terminal mobile personnel peuvent être autorisées ;
dans lequel l'unité de sélection est en outre conçue pour acquérir une liste de premiers identifiants de terminaux de terminaux mobiles personnels pour permettre l'autorisation automatiquement par lots et/ou une liste de seconds identifiants de terminaux de terminaux mobiles personnels pour interdire automatiquement l'autorisation par lots lorsque le mode d'autorisation (b) est sélectionné.

2. Appareil de gestion d'autorisation (300) selon la revendication 1, dans lequel les informations de demande d'autorisation comprennent un identifiant d'ascenseur (102a, 102b) d'un ascenseur (101a, 101b) correspondant d'un système d'ascenseur acquis par le terminal mobile personnel (200) correspondant et un identifiant de terminal du terminal mobile personnel mappé sur l'identifiant d'ascenseur ; et de préférence dans lequel l'unité de gestion d'autorisation (330) est en outre conçue pour déterminer, au moins également sur la base d'une relation de mappage entre l'identifiant d'ascenseur et l'identifiant de terminal dans les informations de demande d'autorisation, si les informations de demande d'autorisation provenant du terminal mobile personnel correspondant peuvent être autorisées.

3. Appareil de gestion d'autorisation (300) selon la revendication 1 ou 2, dans lequel l'unité de sélection (320) est en outre conçue pour sélectionner un mode d'autorisation correspondant pour différents ascenseurs (101a, 101b) ou différents systèmes d'ascenseurs ou différents groupes d'ascenseurs.

4. Appareil de gestion d'autorisation (300) selon une quelconque revendication précédente, dans lequel l'unité de gestion d'autorisation (330) est en outre conçue pour afficher plusieurs des informations de demande d'autorisation sous forme de liste lorsqu'il est déterminé sur la base du mode d'autorisation sélectionné (c) si les informations de demande d'autorisation peuvent être autorisées ; et de préférence dans lequel la liste comprend une colonne d'opération d'autorisation ayant une icône qui est définie correspondant à chaque information de demande d'autorisation et qui peut être activée par la saisie manuelle ou sur laquelle on peut cliquer.

5. Appareil de gestion d'autorisation (300) selon une quelconque revendication précédente, dans lequel l'unité de gestion d'autorisation (330) est en outre conçue pour : lorsque les informations de demande d'autorisation du terminal mobile personnel (200) correspondant à un ascenseur (101a, 101b) dans un groupe d'ascenseurs peuvent être autorisées, permettre d'autoriser le terminal mobile personnel à envoyer une commande de demande de service d'ascenseur à un autre ascenseur du groupe d'ascenseurs.

6. Appareil de gestion d'autorisation (300) selon une quelconque revendication précédente, dans lequel les informations de demande d'autorisation comprennent en outre des informations de justificatif d'identité d'un passager (90) et/ou d'un étage dont l'autorisation est demandée.

7. Procédé de gestion d'autorisation pour une demande de service d'ascenseur, comprenant les étapes
de réception d'informations de demande d'autorisation provenant d'un ou de plusieurs terminaux mobiles personnels (200), **caractérisé en ce que** le procédé comprend en outre :
la sélection d'un mode d'autorisation parmi au moins deux des trois modes d'autorisation suivants :
(a) l'autorisation entièrement auto-autorisée ou l'autorisation entièrement auto-interdite,
(b) l'autorisation auto-autorisée ou l'autorisation auto-interdite par lots, et
(c) l'autorisation autorisée ou l'autorisation interdite entièrement basée sur une saisie manuelle ; et
le fait de déterminer, au moins sur la base du mode d'autorisation sélectionné, si les informations de demande d'autorisation provenant du terminal mobile personnel peuvent être autorisées ; et de préférence dans lequel, dans l'étape de sélection, un mode de sélection correspondant est sélectionné pour différents ascenseurs (101a, 101b) ou différents systèmes d'ascenseurs ou différents groupes d'ascenseurs ;
dans lequel, dans l'étape de sélection, lorsque le mode d'autorisation (b) est sélectionné, une liste de premiers identifiants de terminaux de terminaux mobiles personnels pour permettre l'autorisation automatiquement par lots et/ou une liste de seconds identifiants de terminaux de terminaux mobiles personnels pour interdire automatiquement l'autorisation par lots est/sont acquise(s).

8. Procédé de gestion d'autorisation selon la revendication 7, dans lequel, dans l'étape de sélection, si l'ascenseur (101a, 101b) ou le système d'ascenseur ou le groupe d'ascenseurs n'a pas de restriction d'accès, une autorisation entièrement auto-autorisée dans le mode d'autorisation (a) est sélectionnée ; ou
si l'ascenseur ou le système d'ascenseur ou le groupe d'ascenseurs a une restriction d'accès interdit durant une période de temps actuelle, une autorisation entièrement auto-interdite dans le mode d'autorisation (a) est sélectionnée.

9. Procédé de gestion d'autorisation selon la revendication 7, dans lequel, dans l'étape de sélection, si l'ascenseur (101a, 101b) ou le système d'ascenseur ou le groupe d'ascenseurs n'a pas de restriction d'accès pour un terminal mobile personnel prédéfini (200) pour lequel une autorisation est autorisée automatiquement, une autorisation entièrement auto-autorisée par lots dans le mode d'autorisation (b) est sélectionnée ; ou
si l'ascenseur ou le système d'ascenseur ou le groupe d'ascenseurs a une restriction d'accès interdit pour un terminal mobile personnel prédéfini pour lequel une autorisation est interdite automatiquement, une autorisation auto-interdite dans le mode d'autorisation (b) est sélectionnée.

10. Procédé de gestion d'autorisation selon la revendication 7, dans lequel, dans l'étape de sélection, si l'ascenseur (101a, 101b) ou le système d'ascenseur ou le groupe d'ascenseurs doit avoir une restriction d'accès pour chaque terminal mobile personnel (200), le mode d'autorisation (c) est sélectionné.

11. Procédé de gestion d'autorisation selon la revendication 7, dans lequel, après qu'il a été déterminé sur la base du mode d'autorisation (a) ou du mode d'autorisation (b) si les informations de demande d'autorisation peuvent être autorisées, l'étape de sélection se poursuit pour sélectionner le mode d'autorisation (c), et au moins une partie des informations de demande d'autorisation déterminées sur la base du mode d'autorisation (a) ou du mode d'autorisation (b) sont mises à jour sur la base du mode d'autorisation sélectionné (c) pour déterminer si l'au moins une partie des informations de demande d'autorisation peut être autorisée.

12. Appareil de gestion d'autorisation selon l'une quelconque des revendications 7 à 11, dans lequel l'identifiant d'ascenseur est un code QR ou un code à barres ; et/ou dans lequel l'identifiant de terminal est un numéro de communication, un code d'identification unique du terminal mobile personnel (200) ou un identifiant d'un passager (90) utilisant le terminal mobile personnel ; et/ou dans lequel les informations de demande d'autorisation comprennent en outre des informations de justificatif d'identité d'un passager et/ou d'un étage dont l'autorisation est demandée.

13. Système de gestion d'ascenseur (20), pour gérer un terminal mobile personnel (200) conçu pour envoyer automatiquement une commande de demande de service d'ascenseur, dans lequel le système de gestion d'ascenseur comprend l'appareil de gestion d'autorisation (300) selon l'une quelconque des revendications 1 à 6 ; et de préférence dans lequel le terminal mobile personnel comprend :
une unité d'acquisition conçue pour acquérir un identifiant d'ascenseur (102a, 102b) d'un ascenseur (101a, 101b) correspondant d'un système d'ascenseur ; et
une unité de génération et d'envoi de demande d'autorisation conçue pour générer et envoyer des informations de demande d'autorisation, dans lequel les informations de demande d'autorisation comprennent l'identifiant d'ascenseur acquis et un identifiant de terminal du terminal mobile personnel mappé sur l'identifiant d'ascenseur.
